# EUROPÄISCHE PATENTSCHRIFT

(11) **EP 3 397 859 B1**
(45) Veröffentlichungstag und Bekanntmachung des Hinweises auf die Patenterteilung: **20.01.2021**
(21) Anmeldenummer: 16819321.7
(22) Anmeldetag: 23.12.2016
(51) Int. Cl.: F03D 80/00, H02B 13/025, F03D 13/20, F03D 80/60

(54) **WINDENERGIEANLAGE UND KÜHLVORRICHTUNG FÜR EINE WINDENERGIEANLAGE**
WIND TURBINE AND COOLING DEVICE FOR A WIND TURBINE
ÉOLIENNE ET DISPOSITIF DE REFROIDISSEMENT D'UNE ÉOLIENNE

(30) Priorität: 28.12.2015 DE 102015122855
(43) Veröffentlichungstag der Anmeldung: 07.11.2018
(73) Patentinhaber: Wobben Properties GmbH, 26607 Aurich (DE)
(72) Erfinder: KÖNITZ, Malte, 26135 Oldenburg (DE)
(74) Vertreter: Eisenführ Speiser
(86) Internationale Anmeldenummer: PCT/EP2016/082559
(87) Internationale Veröffentlichungsnummer: WO 2017/114787

(56) Entgegenhaltungen:
- EP-A1- 2 672 114
- WO-A2-2009/056156
- DE-A1-102010 007 136
- DE-A1-102012 221 498
- US-B1- 7 168 251

## Beschreibung

Die vorliegende Erfindung betrifft eine Windenergieanlage und eine Kühlvorrichtung für eine Windenergieanlage.

Jede Windenergieanlage weist eine Mehrzahl von Komponenten auf, welche im Betrieb Wärme erzeugen. Diese Komponenten müssen unter bestimmten Voraussetzungen wie beispielsweise eine hohe Außentemperatur, ein langer Betrieb bei Nennleistung etc. gekühlt werden. Derartige zu kühlende Komponenten sind beispielsweise ein Generator, Wechselrichter, Gleichrichter, Transformatoren, Mittelspannungsschaltgeräte etc.

In der prioritätsbegründenden deutschen Patentanmeldung wurden vom Deutschen Patent- und Markenamt als Stand der Technik die folgenden Dokumente genannt: DE 10 2010 007 136 A1 und WO 2009/056156 A2 Ein weiteres Beispiel aus dem Stand der Technik zeigt einer EP2672114A1.

Es ist eine Aufgabe der vorliegenden Erfindung, eine Windenergieanlage sowie eine Kühlvorrichtung für eine Windenergieanlage vorzusehen, welche eine effektive Kühlung der Windenergieanlage ermöglicht.

Diese Aufgabe wird durch eine Windenergieanlage nach Anspruch 1 sowie durch eine Kühlvorrichtung für eine Windenergieanlage nach Anspruch 5 gelöst.

Somit wird eine Windenergieanlage mit einem Fundament, einem Turm mit einer Turmwandung, mindestens einer zu kühlenden Komponente innerhalb der Turmwandung, einer ersten Kühleinheit innerhalb der Turmwandung zum Kühlen der zu kühlenden Komponenten, einer zweiten Kühleinheit, welche zumindest teilweise außerhalb der Turmwandung vorgesehen ist, und einer Mittelspannungsschalteinheit innerhalb der Turmwandung vorgesehen. Die Windenergieanlage weist ferner mindestens einen Störlichtbogenkanal zwischen der Mittelspannungsschaltanlage und der zweiten Kühleinheit auf. Ferner ist ein Kühlkanal oder eine Kühlleitung zwischen der ersten und zweiten Kühleinheit vorgesehen. Die zweite Kühleinheit weist einen Wärmetauscher auf, welcher mit dem Kühlkanal oder der Kühlleitung gekoppelt ist. Die zweite Kühleinheit weist ferner eine Druckentlastungseinheit auf, welche dazu dient, eine innerhalb der Mittelspannungsschalteinheit entstandene und über den Störlichtbogen übertragene Druckwelle nach außen abzuleiten. Die zweite Kühleinheit weist ein erstes und zweites Ende auf. Das erste Ende ist außerhalb der Turmwandung vorgesehen und das zweite Ende ist zumindest teilweise innerhalb der Turmwandung vorgesehen. Damit kann die Kühleinheit sicher an der Turmwandung befestigt werden.

Gemäß einem Aspekt der vorliegenden Erfindung mündet der Störlichtbogenkanal in ein abgetrenntes Volumen innerhalb der zweiten Kühleinheit, welches mit der Druckentlastungseinheit verbunden ist. Damit kann eine Druckwelle durch den Störlichtbogenkanal, das abgetrennte Volumen und die Druckentlastungseinheit sicher abgeleitet werden, ohne dass es hierbei zu einer Beschädigung der zweiten Kühleinheit kommt.

Gemäß einem Aspekt der vorliegenden Erfindung weist die zweite Kühleinheit mindestens ein einbruchhemmendes Schutzgitter auf. Der Wärmetauscher ist zumindest teilweise hinter dem Schutzgitter innerhalb der zweiten Kühleinheit vorgesehen.

Gemäß einem weiteren Aspekt der vorliegenden Erfindung ist eine Kühlflüssigkeit innerhalb des Kühlkanals vorgesehen.

Die Erfindung betrifft ebenfalls eine Kühlvorrichtung für eine Windenergieanlage. Die Kühlvorrichtung weist eine erste Kühleinheit auf, welche innerhalb einer Turmwandung eines Turms einer Windenergieanlage platzierbar ist. Die Kühlvorrichtung weist eine zweite Kühleinheit auf, welche zumindest teilweise außerhalb einer Turmwandung eines Turms einer Windenergieanlage platzierbar ist. Die zweite Kühleinheit weist einen Wärmetauscher auf, welcher über einen Kühlkanal oder eine Kühlleitung mit der ersten Kühleinheit gekoppelt ist. Die zweite Kühleinheit weist einen Anschluss für einen Störlichtbogenkanal, ein abgetrenntes Volumen und eine Druckentlastungseinheit auf. Der Anschluss für den Störlichtbogenkanal ist mit dem abgetrennten Volumen gekoppelt.

Die Erfindung betrifft den Gedanken, eine Windenergieanlage mit einer Kühlvorrichtung vorzusehen, welche die zu kühlenden Komponenten der Windenergieanlage kühlen kann. Dazu kann die Windenergieanlage mindestens eine Kühleinheit aufweisen, welche beispielsweise als eine Lüfterhaube ausgestaltet sein kann und teilweise außerhalb der Turmwandung platziert ist. In der Kühleinheit ist ein Rückkühler oder ein Wärmetauscher vorgesehen, welcher mit der Kühlvorrichtung gekoppelt ist und ein Kühlfluid, welches durch die zu kühlenden Komponenten der Windenergieanlage erwärmt worden ist, kühlt. Somit ist mindestens eine Kühlleitung zwischen der zumindest teilweise oder abschnittsweise außerhalb der Turmwandung platzierten Kühleinheit und dem Inneren der Turmwandung vorhanden. Die Windenergieanlage weist ebenfalls eine Mittelspannungsschaltanlage oder Mittelspannungsschaltgeräte auf, welche über einen Störlichtbogenkanal ebenfalls mit der Kühleinheit gekoppelt ist, wobei die Kühleinheit eine Druckentlastungseinrichtung (Druckentlastungsklappe) aufweist, welche eine auf Grund eines Störlichtbogens entstehende heiße Druckwelle aus der Mittelspannungsanlage bzw. der Mittelspannungsschaltgeräte (d. h. aus dem Inneren des Turms der Windenergieanlage) nach außen ableiten kann.

Die Kühleinheit gemäß der Erfindung kann in einer Öffnung in der Turmwandung zumindest teilweise (d. h. beispielsweise ein erstes Ende kann in eine Öffnung der Turmwandung eingeführt werden) platziert werden. Ein zweites Ende der Kühleinheit ist somit außerhalb der Turmwandung vorgesehen. Die Kühleinheit weist eine Rückkühleinheit bzw. einen Wärmetauscher auf, welcher mit einem Kühlkanal bzw. einer Kühlleitung gekoppelt ist, welche zu kühlende Komponenten der Windenergieanlage mit dem Wärmetauscher innerhalb der Kühleinheit koppelt. Ferner weist die Kühleinheit eine Druckentlastungseinheit auf, mittels welcher eine beispielsweise in einer Mittelspannungsschaltanlage bzw. der Mittelspannungsschaltgeräte erzeugte Druckwelle aus dem Turm der Windenergieanlage heraus abgeleitet werden kann.

Gemäß einem Aspekt der Erfindung kann ein Einbruchschutz durch eine Reihenschaltung von mindestens zwei einbruchsicheren Gittern vorgesehen werden. Ein äußeres Gitter kann optional als Wetterschutzgitter verwendet werden. Damit kann verhindert werden, dass Regen oder Niederschlag in die Kühleinheit eindringt.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage gemäß einem ersten Ausführungsbeispiel,
- Fig. 2: zeigt eine schematische Schnittansicht einer Windenergieanlage gemäß einem ersten Ausführungsbeispiel,
- Fig. 3: zeigt eine schematische Darstellung einer Kühleinheit gemäß einem zweiten Ausführungsbeispiel, und
- Fig. 4: zeigt eine schematische Schnittansicht einer Kühleinheit gemäß einem zweiten Ausführungsbeispiel.

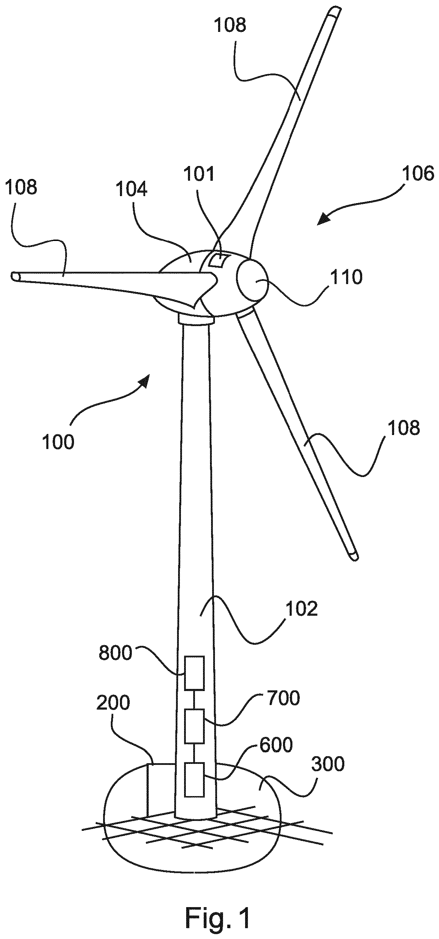

Fig. 1 zeigt eine schematische Darstellung einer Windenergieanlage gemäß einem ersten Ausführungsbeispiel. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen Rotor oder Läufer eines Generators 101, welcher direkt oder indirekt mit dem aerodynamischen Rotor 106 gekoppelt ist. Der elektrische Generator 101 kann in der Gondel 104 angeordnet sein und erzeugt elektrische Energie. Die Pitchwinkel der Rotorblätter 108 können eingestellt werden.

Der Turm 102 der Windenergieanlage ist auf einem Fundament 300 platziert. Innerhalb der Windenergieanlage, insbesondere innerhalb des Turms 102, kann eine Mittelspannungsschalteinheit 600 sowie zu kühlende Komponenten 800 vorgesehen sein. Die zu kühlenden Komponenten 800 können einen Gleichrichter, einen Wechselrichter, einen Transformator oder dergleichen darstellen. Die zu kühlenden Komponenten 800 können mit einer ersten Kühleinheit 700 gekoppelt sein. Eine zweite Kühleinheit 200 kann zumindest außerhalb des Turms 102 vorgesehen sein. Die erste und zweite Kühleinheit 700, 200 können miteinander beispielsweise über Kühlkanäle oder Kühlleitungen, in welchen ein Kühlfluid fließt, gekoppelt sein und können eine Kühlvorrichtung bilden. Das Kühlfluid nimmt beispielsweise Wärme von den zu kühlenden Komponenten 800 auf und gibt sie mittels der zweiten Kühleinheit 200 an die Außenluft ab.

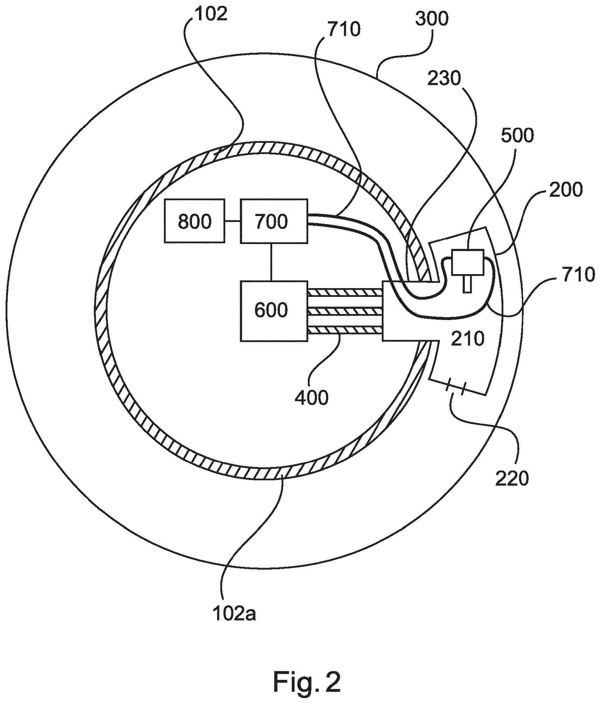

Fig. 2 zeigt eine schematische Schnittansicht einer Windenergieanlage gemäß dem ersten Ausführungsbeispiel. Die Windenergieanlage 100 weist einen Turm 102 auf, welcher auf einem Fundament 300 platziert ist. Der Turm 102 weist eine Turmwandung 102a auf. Innerhalb der Turmwandung 102a können zu kühlende Komponenten 800, eine erste Kühleinheit 700 sowie beispielsweise eine Mittelspannungsschalteinheit bzw. Mittelspannungsschaltgeräte 600 vorgesehen sein. Eine zweite Kühleinheit 200 ist zumindest teilweise außerhalb der Turmwandung 102a vorgesehen. Die zweite Kühleinheit 200 weist einen Wärmetauscher 500 auf, welcher mittels eines Kühlkanals oder Kühlleitungen 710 mit der ersten Kühleinheit 700 gekoppelt ist, welche mit den zu kühlenden Komponenten 800 gekoppelt ist, um die durch die zu kühlenden Komponenten 800 erzeugte Wärme abzuleiten.

Die Windenergieanlage gemäß dem ersten Ausführungsbeispiel weist eine Mittelspannungsschalteinheit bzw. Mittelspannungsschaltgeräte 600 auf, welche über einen Störlichtbogenkanal 400 ebenfalls mit der zweiten Kühleinheit 200 gekoppelt ist. Die zweite Kühleinheit 200 weist eine Druckentlastungseinheit 220 auf, welche mit den Störlichtbogenkanälen 400 gekoppelt ist und dazu geeignet ist, eine innerhalb der Mittelspannungsschaltanlage 600 erzeugte Druckwelle, welche über den Störlichtbogenkanal 400 in die zweite Kühleinheit 200 geführt wird, nach außen abzuleiten.

Damit erfüllt die zweite Kühleinheit zwei Funktionen, nämlich zum einen die Funktion als Wärmetauscher für das Kühlmedium sowie als Druckentlastungseinheit für die Mittelspannungsschaltanlage.

Gemäß dem ersten Ausführungsbeispiel ist ein erstes Ende 210 der zweiten Kühleinheit außerhalb der Turmwandung 102a und ein zweites Ende 230 ist in oder innerhalb der Turmwandung 102a vorgesehen.

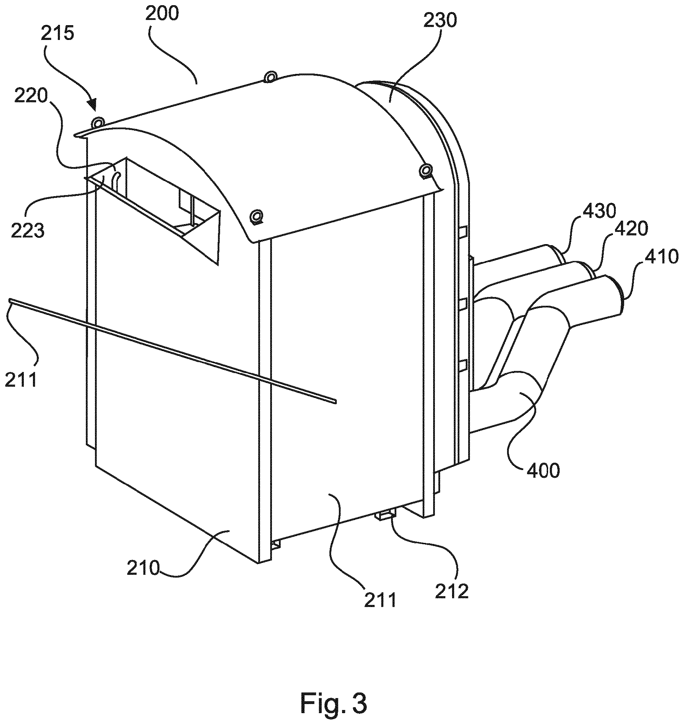

Fig. 3 zeigt eine schematische Darstellung einer Kühleinheit gemäß einem zweiten Ausführungsbeispiel. Die Kühleinheit gemäß dem zweiten Ausführungsbeispiel kann der zweiten Kühleinheit gemäß dem ersten Ausführungsbeispiel entsprechen. Die zweite Kühleinheit 200 weist einen ersten Abschnitt 210 und einen zweiten Abschnitt 230 auf. Der erste Abschnitt bzw. das erste Ende 210 befindet sich im eingebauten Zustand außerhalb der Turmwandung 102a, während der zweite Abschnitt bzw. das zweite Ende 230 sich innerhalb der Turmwandung 102a befindet. Über den zweiten Abschnitt bzw. das zweite Ende 230 erfolgt somit eine Anbindung der zweiten Kühleinheit an den Turm der Windenergieanlage. Die zweite Kühleinheit 200 ist über einen Störlichtbogenkanal 400 mit einer Mittelspannungsschalteinheit bzw. Mittelspannungsschaltgeräte 600 beispielsweise innerhalb der Turmwandung 102a verbunden. Der Störlichtbogenkanal 400 kann beispielsweise aus drei Rohren 410, 420, 430 bestehen.

Am ersten Ende 210 ist eine Druckentlastungseinheit 220 vorgesehen. Die Druckentlastungseinheit 220 kann einen Öffnungsbegrenzer 223 sowie eine Feder aufweisen, welche die Klappe im normalen Zustand geschlossen hält. Das erste Ende 110 kann mindestens ein Schutzgitter 111 aufweisen, welches als ein einbruchshemmendes Schutzgitter ausgestaltet ist. Hinter dem Schutzgitter 211 kann ein Wärmetauscher oder ein Rückkühler 500 platziert sein. Die zweite Kühleinheit 200 weist Füße 212 auf, welche beispielsweise auf dem Fundament 300 der Windenergieanlage platziert sind. Damit steht die zweite Kühleinheit, welche beispielsweise als Lüfterhaube ausgestaltet ist, auf dem Fundament der Windenergieanlage.

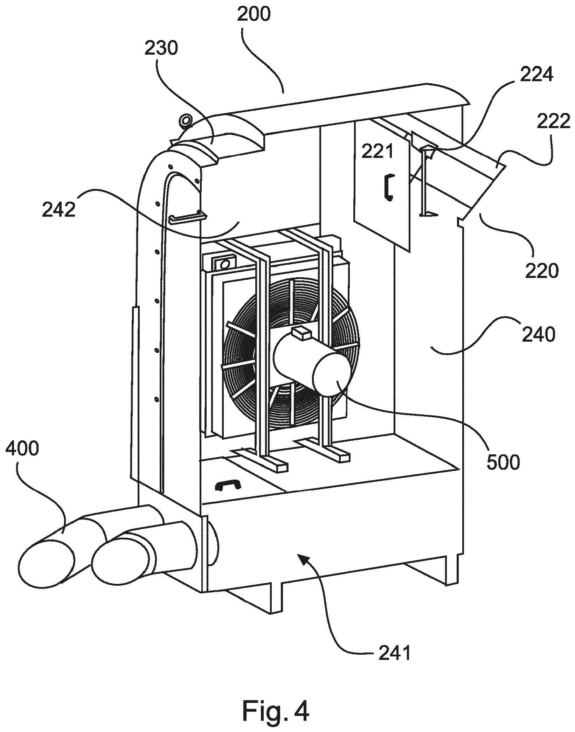

Fig. 4 zeigt eine schematische Schnittansicht einer Kühleinheit gemäß dem zweiten Ausführungsbeispiel. An dem ersten Abschnitt bzw. dem ersten Ende 210 ist eine Druckentlastungseinheit 220 mit einer Feder 224 und einem Öffnungsbegrenzer 223 vorgesehen. Im Inneren 240 der zweiten Kühleinheit 200 ist ein Rückkühler bzw. ein Wärmetauscher 500 vorgesehen. Der Rückkühler bzw. der Wärmetauscher 500 ist insbesondere hinter dem Schutzgitter 211 als ein einbruchhemmendes Schutzgitter platziert. Im unteren Bereich der zweiten Kühleinheit 200 kann der Störlichtbogenkanal 400 in ein separates Volumen 241 münden. Von diesem separaten Volumen 241 kann ein Kanal zu der Druckentlastungseinheit vorhanden sein, so dass eine in der Mittelspannungsschalteinheit 600 entstandene Druckwelle durch den Störlichtbogenkanal 400, das Volumen 241 und die Druckentlastungseinheit 220 nach außen geleitet werden kann.

Zur Verbesserung des Einbruchschutzes bzw. der Einbruchshemmung kann hinter dem Schutzgitter 211 ein weiteres Schutzgitter vorgesehen sein. Das äußere Schutzgitter 211 kann als Wetterschutzgitter dienen, so dass verhindert werden kann, dass Regen oder Niederschlag in die zweite Kühleinheit 200 eindringt.

## Patentansprüche

1. Windenergieanlage, mit
einem Fundament (300),
einem Turm (102) mit einer Turmwandung (102a),
mindestens einer zu kühlenden Komponente (800) innerhalb der Turmwandung (102a),
einer ersten Kühleinheit (700) innerhalb der Turmwandung (102a) zum Kühlen der zu kühlenden Komponenten (800),
einer zweiten Kühleinheit (200), welche zumindest teilweise außerhalb der Turmwandung (102a) vorgesehen ist,
mindestens einem Kühlkanal oder einer Kühlleitung (710) zwischen der ersten und zweiten Kühleinheit (700, 200),
wobei die zweite Kühleinheit (200) einen Wärmetauscher (500) aufweist, welcher mit dem Kühlkanal bzw. der Kühlleitung (710) gekoppelt ist, und wobei die zweite Kühleinheit (200) ein erstes Ende (210) und ein zweites Ende (230) aufweist, wobei das erste Ende (210) außerhalb der Turmwandung (102a) vorgesehen ist und das zweite Ende zumindest teilweise innerhalb der Turmwandung (102a) vorgesehen ist,
**dadurch gekennzeichnet, dass** die Windenergieanlage eine Mittelspannungsschalteinheit (600) innerhalb der Turmwandung (102a) und mindestens einen Störlichtbogenkanal (400) zwischen der Mittelspannungsschalteinheit (600) und der zweiten Kühleinheit (200) aufweist und dadurch, dass die zweite Kühleinheit (200) eine Druckentlastungseinheit (220) aufweist, welche dazu dient, eine innerhalb der Mittelspannungsschalteinheit (600) entstandene und über den Störlichtbogenkanal (400) übertragene Druckwelle nach außen abzuleiten

2. Windenergieanlage nach Anspruch 1, wobei
der Störlichtbogenkanal (400) in ein abgetrenntes Volumen (241) innerhalb der zweiten Kühleinheit (200) mündet, welches mit der Druckentlastungseinheit (220) verbunden ist.

3. Windenergieanlage nach einem der Ansprüche 1 bis 2, wobei
die zweite Kühleinheit (200) mindestens ein einbruchshemmendes Schutzgitter (211) aufweist,
wobei der Wärmetauscher (500) zumindest teilweise hinter dem Schutzgitter (211) angeordnet ist.

4. Windenergieanlage nach einem der Ansprüche 1 bis 3, wobei
eine Kühlflüssigkeit innerhalb des Kühlkanals (710) fließt.

5. Kühlvorrichtung für eine Windenergieanlage, mit
einer ersten Kühleinheit (700), welche innerhalb einer Turmwandung eines Turms einer Windenergieanlage platzierbar ist, und
einer zweiten Kühleinheit (200), welche zumindest teilweise außerhalb einer Turmwandung (102a) eines Turms (102) einer Windenergieanlage (100) platzierbar ist,
wobei die zweite Kühleinheit (200) einen Wärmetauscher (500) aufweist, welcher über einen Kühlkanal oder eine Kühlleitung (710) mit der ersten Kühleinheit (700) gekoppelt ist,
**dadurch gekennzeichnet, dass** die zweite Kühleinheit einen Anschluss für einen Störlichtbogenkanal (400), ein abgetrenntes Volumen (241) und eine Druckentlastungseinheit (220) aufweist, wobei der Anschluss für den Störlichtbogenkanal (400) mit dem abgetrennten Volumen (241) gekoppelt ist.

## Claims

1. Wind turbine having
a foundation (300),
a tower (102) with a tower wall (102a),
at least one component to be cooled (800) within the tower wall (102a),
a first cooling unit (700) within the tower wall (102a) for cooling the components (800) to be cooled,
a second cooling unit (200), which is provided at least partially outside the tower wall (102a),
at least one cooling duct or a cooling line (710) between the first and second cooling unit (700, 200),
wherein the second cooling unit (200) has a heat exchanger (500) which is coupled to the cooling duct or the cooling line (710), and
wherein the second cooling unit (200) has a first end (210) and a second end (230), wherein the first end (210) is provided outside the tower wall (102a) and the second end is provided at least partially inside the tower wall (102a),
**characterized in that** the wind turbine comprises
a medium-voltage switchgear assembly (600) within the tower wall (102a), and
at least one fault arc duct (400) between the medium-voltage switchgear assembly (600) and the second cooling unit (200), and
**in that** the second cooling unit (200) has a pressure-release unit (220) which serves to guide a pressure wave which is formed inside the medium-voltage switchgear assembly (600) and is transmitted via the fault arc duct (400) to the outside.

2. The wind turbine according to claim 1, wherein
the fault arc duct (400) opens into a separate volume (241) inside the second cooling unit (200) which is connected to the pressure-release unit (220).

3. The wind turbine according to one of claims 1 to 2, wherein
the second cooling unit (200) has at least one burglar-resistant protective grid (211), and
wherein the heat exchanger (500) is arranged at least partially behind the protective grid (211).

4. The wind turbine according to one of claims 1 to 3, wherein
a cooling liquid flows inside the cooling duct (710).

5. Cooling device for a wind turbine having
a first cooling unit (700), which can be placed inside a tower wall of a tower of a wind turbine and
a second cooling unit (200), which can be placed at least partially outside a tower wall (102a) of a tower (102) of a wind turbine (100),
wherein the second cooling unit (200) comprises a heat exchanger (500) which is coupled to the first cooling unit (700) via a cooling duct or a cooling line (710),
**characterized in that** the second cooling unit has a connection for a fault arc duct (400), a separate volume (241) and a pressure-release unit (220), wherein the connection for the fault arc duct (400) is coupled to the separate volume (241).

## Revendications

1. Éolienne avec
une fondation (300),
une tour (102) avec une paroi de tour (102a),
au moins un composant (800) à refroidir à l'intérieur de la paroi de tour (102a),
une première unité de refroidissement (700) à l'intérieur de la paroi de tour (102a) pour refroidir le composant (800) à refroidir,
une deuxième unité de refroidissement (200), laquelle est prévue au moins en partie à l'extérieur de la paroi de tour (102a),
au moins un canal de refroidissement ou un conduit de refroidissement (710) entre la première et la deuxième unité de refroidissement (700, 200),
dans laquelle la deuxième unité de refroidissement (200) présente un échangeur de chaleur (500), lequel est couplé au canal de refroidissement ou au conduit de refroidissement (710), et dans laquelle la deuxième unité de refroidissement (200) présente une première extrémité (210) et une deuxième extrémité (230), dans laquelle la première extrémité (210) est prévue à l'extérieur de la paroi de tour (102a) et la deuxième extrémité est prévue au moins en partie à l'intérieur de la paroi de tour (102a),
**caractérisée en ce que** l'éolienne présente une unité de commutation à tension moyenne (600) à l'intérieur de la paroi de tour (102a) et au moins un canal à arc électrique parasite (400) entre l'unité de commutation à tension moyenne (600) et la deuxième unité de refroidissement (200), et **en ce que** la deuxième unité de refroidissement (200) présente une unité de décharge de pression (220), laquelle sert à dévier vers l'extérieur une onde de pression apparue à l'intérieur de l'unité de commutation à tension moyenne (600) et transmise par l'intermédiaire du canal à arc électrique parasite (400).

2. Éolienne selon la revendication 1, dans laquelle
le canal à arc électrique parasite (400) débouche dans un volume (241) séparé à l'intérieur de la deuxième unité de refroidissement (200), lequel est relié à l'unité de décharge de pression (220).

3. Éolienne selon l'une quelconque des revendications 1 à 2, dans laquelle
la deuxième unité de refroidissement (200) présente au moins une grille de protection (211) anti-effraction,
dans laquelle l'échangeur de chaleur (500) est disposé au moins en partie derrière la grille de protection (211).

4. Éolienne selon l'une quelconque des revendications 1 à 3, dans laquelle
un liquide de refroidissement s'écoule à l'intérieur du canal de refroidissement (710).

5. Dispositif de refroidissement pour une éolienne, avec
une première unité de refroidissement (700), laquelle peut être placée à l'intérieur d'une paroi de tour d'une tour d'une éolienne, et
une deuxième unité de refroidissement (200), laquelle peut être placée au moins en partie à l'extérieur d'une paroi de tour (102a) d'une tour (102) d'une éolienne (100),
dans lequel la deuxième unité de refroidissement (200) présente un échangeur de chaleur (500), lequel est couplé à la première unité de refroidissement (700) par l'intermédiaire d'un canal de refroidissement ou d'un conduit de refroidissement (710),
**caractérisé en ce que** la deuxième unité de refroidissement présente un raccord pour un canal à arc électrique parasite (400), un volume (241) séparé et une unité de décharge de pression (220), dans lequel le raccord pour le canal à arc électrique parasite (400) est couplé au volume (241) séparé.
